## Europäisches Patentamt
## European Patent Office
## Office européen des brevets

(11) Publication number: **0 062 384**
**A1**

(12) **EUROPEAN PATENT APPLICATION**

(21) Application number: **82200405.7**

(22) Date of filing: **31.03.82**

(51) Int. Cl.³: **A 01 F 25/20**, **B 26 D 7/26**

(30) Priority: **01.04.81 NL 8101629**

(43) Date of publication of application: **13.10.82**
**Bulletin 82/41**

(84) Designated Contracting States: **BE DE FR GB NL**

(71) Applicant: **Multinorm B.V., Hoofdweg 1278 P.O. Box 1, NL-2150 AA Nieuw-Vennep (NL)**

(72) Inventor: **Vissers, Hermanus Hendrik, 711 Venneperweg, NL-2152 MA Nieuw-Vennep (NL)**
Inventor: **Weststrate, Marinus Hendrikus, 11 Heereweg, NL-2161 AB Lisse (NL)**
Inventor: **Prins, Nicolaas, 65 Sotaweg, NL-2371 GB Roelofarendsveen (NL)**

(74) Representative: **Hoorweg, Petrus Nicolaas et al, OCTROOIBUREAU ARNOLD & SIEDSMA Sweelinckplein 1, NL-2517 GK The Hague (NL)**

(54) **Ensilage cutting device.**

(57) An ensilage cutting device mainly comprising a frame (1) for supporting a substantially horizontal carrying element (2), for example, a fork and a guide (3) arranged at a distance above the same for a carriage (4) movable along the same and having a cutting member (5) to be driven upwards and downwards, said cutting member (5) being formed by an elongate blade of wedge-shaped cross-section, in which the angle of the wedge is at the most 30° ad preferably 20° and provided with tines each having two cutting edges extending asymmetrically with respect to a cross-section of the blade whereas said device further comprises at least one pressing member acting on the einsilage packets and being movable along a substantially rectilinear path by means of a pivotable rod system, said pressing member is adapted to push the cut packets of ensilage away from the carrying element or to act on top of the packet of ensilage to be cut out in order to optimize the cutting effect of the cutting member in the ensilage.

Ensilage cutting device
------------------------------------------------------------------------

The invention relates to an ensilage cutting device mainly comprising a frame for supporting a substantially horizontal carrying element, for example, a fork and a guide arranged at a distance above the same for a carriage movable along the same and having a cutting member to be driven upwards and downwards.

The invention has for its object to improve the shape of the cutting member in a manner such that the overall cutting time per unit of length is materially reduced to even 50% of that of the conventional cutting members, which improved cutting effect also contributes to a reduction of the required driving power.

The ensilage cutting device according to the invention is distinguished in that the cutting member is formed by an elongate blade of wedge-shaped cross-section, in which the angle of the wedge is at the most $30^{\circ}$ and preferably $20^{\circ}$.

Owing to this slender wedge shape of the cutting member the total displacement resistance during the cutting operation is reduced.

According to the invention the cutting blade is furthermore provided at the tip of the wedge with tines each having two cutting edges extending asymmetrically with respect to the transverse surface of the blade, one cutting edge mainly protruding with respect to a direction of movement. Owing to the protruding position of the cutting edge the tine tends to penetrate further into the material so that cutting movement additionally contributes to the advance movement, which reduces the load of the moment on the carriage along the guide.

Preferably the other cutting edge of the tine

0062384

extends parallel or substantially parallel to the vector composed by the velocity vector of one direction of movement and the velocity vector of the carriage.

In order to reduce the resistance during the cutting operation of such asymmetrical tines the plane of connection of the cutting edges to the side surface of the cutting blade is at an angle of at the most 30°, preferably 20° to the prolongation of the side surface.

In order to facilitate grinding of the cutting member the cutting lines are located in the side surface of the wedge-shaped cutting blade.

In order to avoid a lateral deflection during the cutting operation it is preferred in this case to provide the cutting edges alternately in another side face of the wedge-shaped cutting blade.

The invention furthermore relates to a device of the kind  set forth in the preamble which comprises a pressing member acting on the ensilage packet. According to the invention the pressing member is arranged so as to be movable along a substantially rectilinear path by means of a pivotable rod system. This has the advantage that both the rod system and the pressing member occupy minimum space so that the mechanism can easily be accomodated within the boudns of the device formed by the cutting face of the cutting member and the frame.

The rod system is preferably formed by two rods pivoted to a carrying part of the device, to the free ends of which is pivoted a coupling rod connected with the pressing member.

The pressing member may be formed by means to push the cut packet of ensilage away from the carrying element and in this case the rod system is pivotally connected near the carrying element with the frame, the pressing member then being movable along a substantially rectilinear path over the carrying element.

When the pressing member is provided on the underside with supports extending across the carrying element, the ensilage can be slipped in a simple manner from the carrying element by depositing the device on said supports
and by moving forwards the carriage or tractor carrying
the device.

When the pressing member is used as a stamp acting
on top of the packet of ensilage to be cut out in order to
optimalize the cutting effect of the cutting member in the
ensilage, it is preferred to pivot the rod system to the
guide of the carriage for the cutting member, the pressing
member then being formed by a ram acting on the top of the
ensilage.

By this construction the height of the device is
limited so that the manoeuverability of the device is enhanced.

The invention will be described more fully hereinafter
with reference to the Figures.

The drawing shows in

Fig. 1 a side elevation of an embodiment of the ensilage cutter comprising as a cutting member a saw blade which
is vertically movable up and down,

Figs. 2, 3 and 4 perspective views of different
embodiments of the tine forms used on the cutting member of
Fig. 1,

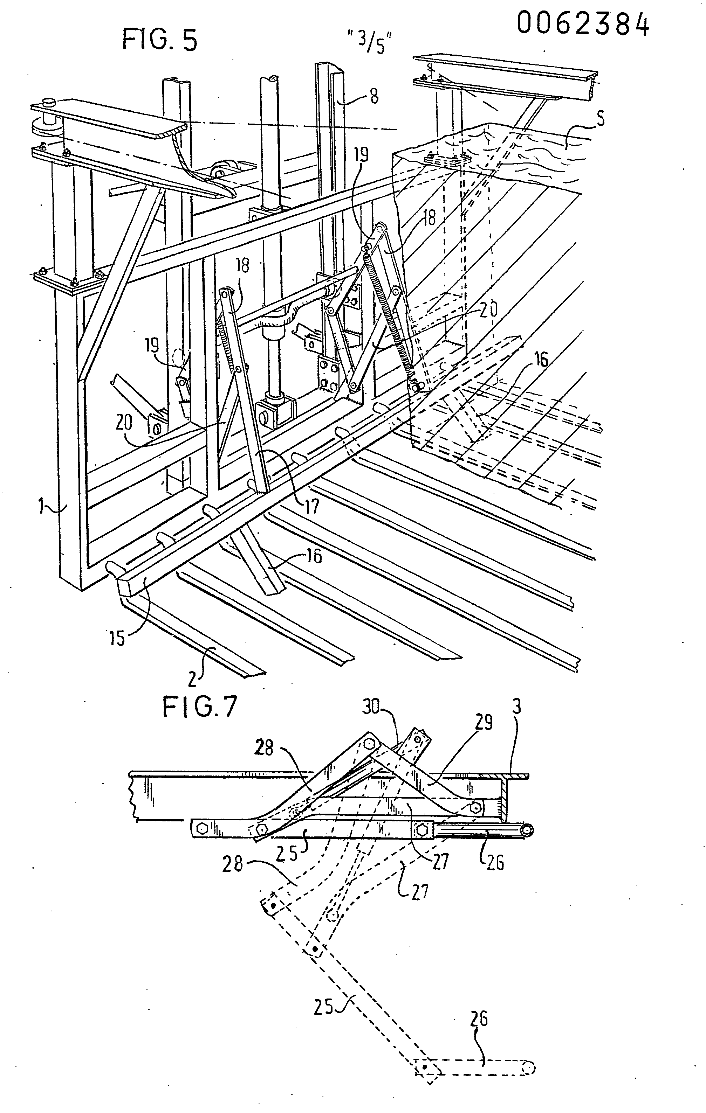

Fig. 5 a perspective view of a detail of the device
provided with a pushing member,

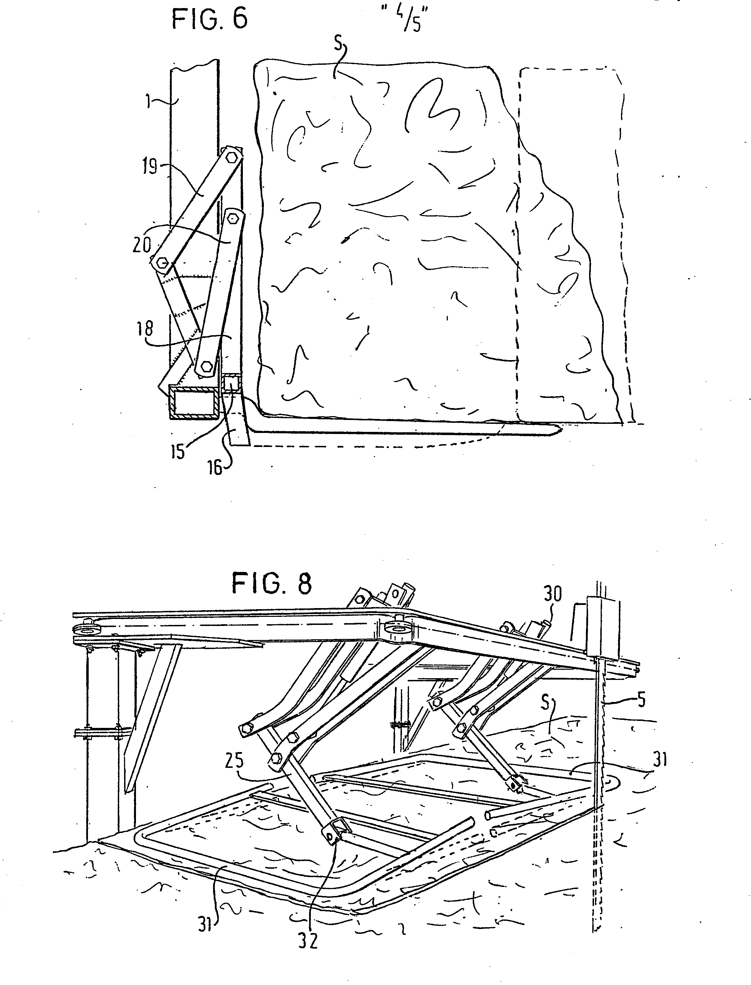

Fig. 6 a side elevation of the device of Fig. 5,

Fig. 7 a side elevation of a detail of the guide with
a ram suspended thereto,

Figs. 8, 9 and 10 perspective views of the top side
of the device provided with a guide to which are suspended
variants of a ram structure.

The device shown in the Figures mainly comprises a
framework 1 provided on the underside with a carrying element
2 formed, for example, by a fork and on the top side with a
guide 3, along which is guided a carriage 4 having a cutting
member 5 adapted to move up and down in the direction of
the arrow P1.

The framework 1 is movable up and down by means of a
cylinder 6 along a frame 8 that can be coupled with an
agricultural tractor 7.

0062384

In known manner a slice can be cut from a stack of ensilage or a silo S by inserting the fork-shaped carrying element 2 in the direction of the arrow P2 at a given height, by moving the cutting member 5 up and down and by moving the carriage 4 along the guide 3.

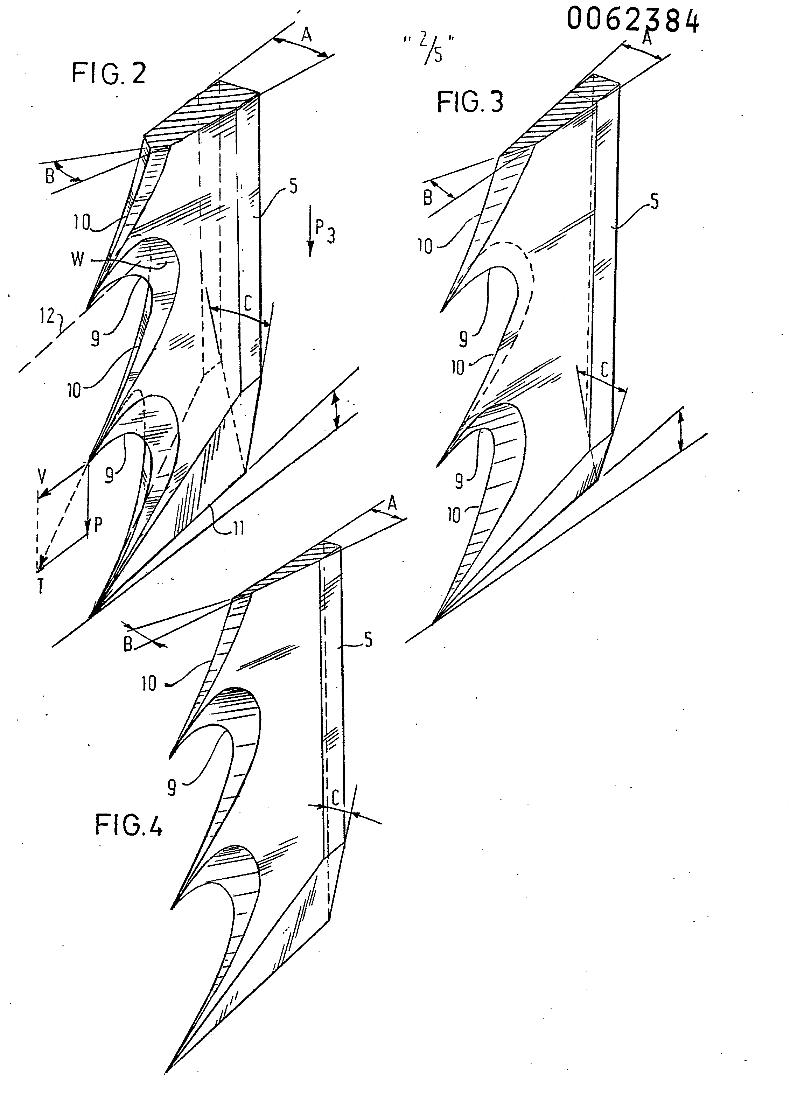

Figs. 2, 3 and 4 show a few shapes of tines suitable for use on the cutting member 5 in accordance with the invention.

The cutting member 5 has an elongate structure and in a cross-sectional view it has the shape of a wedge, which is designated in the Figures by A. According to the invention the angle of the wedge is at the most $30^O$, but preferably $20^O$.

The tines located near the tip of the wedge each have two cutting edges 9 and 10 respectively, which have an asymmetrical shape with respect to the transverse plane.

The cutting edge 9 is preferably disposed in a protruding position with respect to one, for example, downward movement P3 of the cutting blade 5. Although the cutting edge 9 shown in the Figures has a slightly curved shape , it may, as an alternative, be straight.

The cutting edge 10 extends parallel or substantially parallel to the vector T formed by the velocity vector P of the downward movement P3 and the velocity vector V of the carriage 4 along the guide 3 (see Fig. 2).

The short lower rim of the cutting blade 5 also extends opposite the direction of movement P3, whilst the cutting edge 11 extends substantially parallel to the line 12 at the cutting edge 9, indicating the medium protruding position of the cutting edge 9.

The plane of connection W between the cutting edge 9 and 10 respectively and the side face of the wedge-shaped body is at an angle B of at the most $30^O$, but preferably $20^O$ to the prolongation of the side face of the wedge-shaped body. The cutting angle C along the cutting edge on the underside of the blade 5 is also at the most $30^O$, but prefer-ably $20^O$.

In the embodiment shown in Fig. 2 the cutting edges 9, 10 are located in the same plane i.e. the longitudinal medium plane of the wedge-shaped body 5.

From Fig. 3 it will be apparent that the cutting edges 9, 10 are alternately located in one and the other side face of the wedge-shaped body 5. This simplifies post-grinding of the cutter because only the side face of the wedge need be ground afterwards to obtain the edges 9, 10.

In the embodiment shown in Fig. 4 the cutting edges 9, 10 are located in one face of the wedge-shaped body 5 i.e. the rear face.

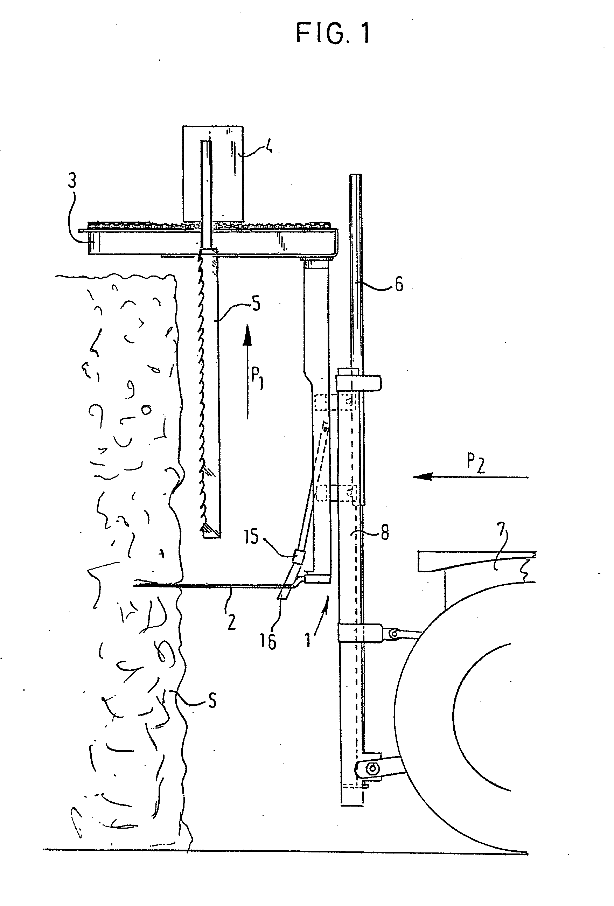

Fig. 5 is a perspective view of the lower part of the device of Fig. 1; the corresponding parts are designated by the same reference numerals.

Near the lower side of the framework 1 a pressing member 15 is arranged above the carrying element 2, said member 15 being provided on the underside with supports 16 extending across the carrying elment (see also Fig. 1). The pressing member 15 is fastened to the end of two coupling rods 17, 18, each of which is pivotally connected with two pivotal rods 19 and 20 respectively. The pivotal rods 19, 20 are each pivoted to the framework 1 in a manner such that a pivotal quadrangle is formed.

Between the coupling rod 18 and one of the pivotal rods 19, 20 is arranged a tensile spring 21.

The pressing member 15 can be used as follows. By lowering the framework 1 along the guide 8 the supports 16 will touch the ground. While driving the tractor forwards, the supports 16 will remain on the ground, whilst the device is drawn on. Therefore, the pressing member 15 will perform a movement with respect to the carrying element 2 and will slip an ensilage slice S received on the carrying element 2 off said carrying element 2. The positions of the pivotal joints of the pivotal rods 17, 18, 19 and 20 are selected so that the rod-shaped pressing member 15 moves along a path substantially parallel to the top face of the carrying element 2, as a result of which the supports 16 continue extending across the tines of the carrying element 2 throughout the length of movement of the pressing member 15. Thus the slice can be effectively slipped out of the device.

From Fig. 6 it will be apparent that the pivotal rod system has the advantage that on the tractor side of the device the mechanism is hardly protruding.

Fig. 7 shows a similar rod system, but intended for a ram operating on the top side of an ensilage slice. The rod system comprises a coupling rod 25, the end of which is provided with the pushing ram 26. The coupling rod is connected with two pivotal rods 27 and 28, which are rotatably fastened to a support 29. The support 29 is held in place on the inner side of the guide rail 3 of the device.

A hydraulic ram 30, operating between the support 29 and the arm 27, ensures an upward-downward movement of the pressing ram 26 in a manner such that this movement is substantially rectilinear.

Figs. 8, 9 and 10 are perspective views of different embodiments of the rams to be used.

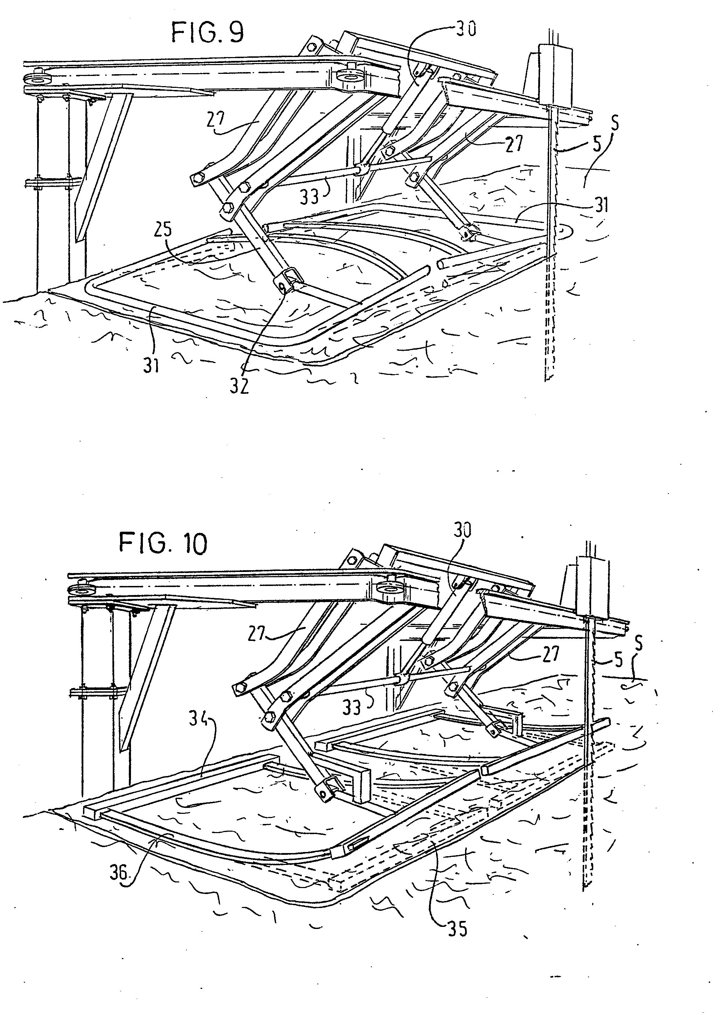

Figs. 8 and 9 each show a ram in the form of a curved tubing 32, which is omnidirectionally pivoted at 32 to the coupling rod 25 of the rod system. The shape of the ram 31 substantially matches the cut of the cutting member 5 in the silo S. In the embodiment of Fig. 8 each ram has its own rod system and its own hydraulic ram 30.

Fig. 9 shows an embodiment in which the pivotal rods 27 of two systems have arranged between them a more or less resilient coupling rod 33, which is engaged by a common hydraulic ram 30. In this embodiment the two rams 31 simultaneously move upwards or downwards.

If necessary, an omnidirectionally pivotable joint may be arranged between the rod 33 and the hydraulic ram 30 and the pivotal rods 27 respectively instead of using a resilient rod 33.

Fig. 10 shows an embodiment in which the rod system having a common hydraulic ram corresponds with that of Fig. 9, though the pushing ram is constructed in the form of two parallel rods 34, 35, between which a leaf spring 36 is arranged. Such a leaf spring enhances the pushing effect of the ram on the top side of the ensilage.

The invention is not limited to the embodiments depicted above.

CLAIMS

1. An ensilage cutting device mainly comprising a frame for supporting a carrying element extending substantially in a horizontal direction, for example, a fork and a guide arranged at a distance above said carrying element for a carriage movable along the same and having a cutting member to be driven in upward and downward direction characterized in that the cutting member is formed by an elongate blade of wedge-shaped section, the angle of the wedge being at the most $30^{\circ}$ and preferably $20^{\circ}$.

2. A device as claimed in claim 1 characterized in that at the tip of the wedge the cutting blade is provided with tines each having two cutting edges extending asymmetrically with respect to the transverse plane, one cutting edge extending mainly in a protruding position with respect to a direction of movement.

3. A device as claimed in claims 1 and 2 characterized in that the other cutting edge extends parallel or substantially parallel to the vector composed of the velocity vector of one direction of movement and the velocity vector of the carriage.

4. A device as claimed in anyone of the preceding claims characterized in that the plane of connection of the cutting edges to the side face of the cutting blade is at an angle of at the most $30^{\circ}$, preferably $20^{\circ}$ to the prolongation of the side face.

5. A device as claimed in anyone of the preceding claims characterized in that the cutting edges are located in a side face of the wedge-shaped cutting blade.

6. A device as claimed in anyone of the preceding claims 1 to 4 characterized in that the cutting edges are alternately located in one and in the other side face of the wedge-shaped cutting blade.

7. A device as claimed in anyone of the preceding claims characterized in that the short side of the cutting blade remote from the carriage has a wedge-shaped cutting edge, the apex of which is at the most 30$^O$ and preferably 20$^O$.

8. A device as claimed in claim 7 characterized in that the cutting edge of the short side extends parallel or substantially parallel to one cutting edge of the tines.

9. An ensilage cutting device mainly comprising a frame for supporting a substantially horizontal carrying element, for example, a fork and a guide arranged at a distance above said carrying element for a carriage adapted to move along the same and having an upwardly and downwardly movable cutting member and provided with a pressing member acting on the ensilage characterized in that the pressing member is arranged by means of a pivotal rod system so as to be movable along a substantially rectilinear path.

10. A device as claimed in claim 9 characterized in that the rod system is formed by two rods pivoted to a carrying part of the device and having pivoted to their free ends a coupling rod connected with the pressing member.

11. A device as claimed in claim 9 or 10 characterized in that the rod system is pivotally connected near a carrying element with the frame and the pressing member is movable over said carrying element along a substantially rectilinear path.

12. A device as claimed in claim 11 characterized in that the carrying element is provided on the underside with supports extending across the carrying element.

13. A device as claimed in anyone of the preceding claims 9 and 10 characterized in that the rod system is pivotally connected with the guide of the carriage and the pressing member is constructed in the form of a ram acting on the top of the ensilage.

14. A device as claimed in claim 13 characterized in that each ram has a U-shaped form and is omnidirectionally pivoted to the coupling rod.

15. A device as claimed in claims 13 and 14 characterized in that one or more parts of the ram is (are) formed by (a) leaf spring(s).

# FIG. 1

FIG. 2

FIG. 3

FIG.4

0062384

"2/5"

FIG. 5

FIG.7

FIG. 6

FIG. 8

FIG. 9

FIG. 10

**EUROPEAN SEARCH REPORT**

0062384
Application number

EP 82 20 0405

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 929 782 (TRIOLIET) *Page 12; paragraphs 2,3,4; figures 1,9* | 1 | A 01 F 25/20 B 26 D 7/26 |
| | --- | | |
| A | US-A-4 131 996 (JANKE) *Column 2, lines 52-68; column 3, lines 1-44; figures 2,3,4* | 1 | |
| | --- | | |
| A | US-A-3 780 436 (PELLMAN) *Column 2, lines 9-68; column 3, lines 1-14; figures 1,2,3,4* | 1,2,3 | |
| | --- | | |
| A | FR-A-2 456 464 (TRIOLIET) *Page 5 - page 10; figures 1,2,3,4,5,7* | 1,9,10 ,11,13 ,14,15 | |
| | ----- | | |

TECHNICAL FIELDS SEARCHED (Int. Cl. ³)

A 01 F
B 26 D

The present search report has been drawn up for all claims

| Place of search | Date of completion of the search | Examiner |
|---|---|---|
| THE HAGUE | 15-07-1982 | VERMANDER R.H. |